# EUROPEAN PATENT APPLICATION

(11) **EP 1 734 677 A1**
(43) Date of publication of application: **20.12.2006**
(21) Application number: 06012317.1
(22) Date of filing: 14.06.2006
(51) Int. Cl.: H04H 1/00

(54) **Method and apparatus for storing DMB audio data in a DMB terminal**

(30) Priority: 16.06.2005 KR 20050051975
(71) Applicant: Samsung Electronics Co., Ltd., Yeongtong-gu Suwon-si, Gyeonggi-do (KR)
(72) Inventor: Han, Seung-Jae, Yeongton-gu Suwon-si Gyeonggi-do (JP)
(74) Representative: Grünecker, Kinkeldey, Stockmair & Schwanhäusser Anwaltssozietät

(57) **Abstract**

A method and apparatus for storing DMB audio data in a DMB terminal are provided. In a DMB reception mode, DMB audio data of a currently received music file is output in real time, while being temporarily stored. Upon receipt of a recording request from a user at any time during receiving the DMB audio data, the entire DMB audio data is finally stored.

## Description

The present invention relates generally to Digital Multimedia Broadcasting (DMB), and in particular, to a method and apparatus for storing DMB audio data in a DMB terminal.

Typically, DMB is divided into audio broadcasting which broadcasts broadcasting contents with audio data only in the form of digital data, like music files or radio broadcasting, and video broadcasting which broadcasts broadcasting contents with audio data and moving picture data in the form of digital data, such as music videos and movies. The audio broadcasting may sequentially provide an unspecified number of music files with a program host's comments via a plurality of channels.

A DMB user can record DMB audio data while listening to DMB audio broadcasting through his DMB terminal. For example, when the user enters a Record key to record an intended music played via an audio broadcasting channel, the DMB terminal records the on-going DMB audio data, starting from the time when the Record key is pressed.

However, the intended music file may not be recorded in its entirety. Because the DMB terminal starts to record the DMB audio data corresponding to the music file when the Record key is pressed, if the key pressing is done in the middle of the music file, the part of the music that had been already played is missing. If the user wants to record the entire music file, he must get ready to press the Record key timely with the start of the music.

The present invention is to substantially solve at least the above problems and/or disadvantages and to provide at least the advantages below. It is the object of the present invention to provide a method and apparatus for conveniently recording DMB audio data received through a DMB terminal.

This object is solved by the subject matter of the independent claims.

Preferred embodiments are defined in the dependent claims.

According to an aspect of the present invention, there is also provided a DMB audio data recording method and apparatus for enabling recording of the entire received DMB music file.

The above is achieved by providing a method and apparatus for storing DMB audio data in a DMB terminal.

In the DMB audio data storing method, DMB audio data of a current receiving music file is output in real time, while being temporarily stored. Upon receipt of an event information present/following table (EIT p/f table), the temporary storing of the DMB audio data is completed. Upon receipt of a recording request from a user during temporarily storing the DMB audio data, the DMB audio data upon is finally stored.

The present invention will become more apparent from the following detailed description when taken in conjunction with the accompanying drawings in which:
FIG. 1 is a block diagram of a DMB terminal to which the present invention is applied;
FIG. 2 is a flowchart illustrating an operation of the DMB terminal according to an embodiment of the present invention; and
FIG. 3 illustrates screen displays according to the embodiment of the present invention.

A preferred embodiment of the present invention will be described herein below with reference to the accompanying drawings. In the following description, well-known functions or constructions are not described in detail since they would obscure the invention in unnecessary detail.

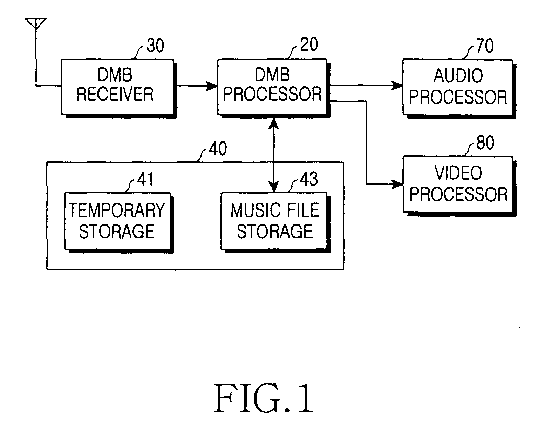

Referring to FIG. 1, a DMB terminal to which the present invention is applied includes a DMB receiver 30, a DMB processor 20, an audio processor 70, a video processor 80, and a memory 40, which includes a temporary storage 41 and a music file storage 43.

The DMB receiver 30 receives a DMB signal under the control of the DMB processor 20. The DMB processor 20 decodes the DMB signal according to key data received from a keypad (not shown) and provides audio and video data of the decoded DMB signal to the audio processor 70 and the video processor 80, respectively. The audio processor 70 outputs the received audio data to an audio output device including a speaker, a receiver, etc., while the video processor 80 visually displays the received video data under the control of the DMB processor 20.

The memory 40 stores programs for processing and controlling in the DMB processor 20, reference data and updatable data to be stored, and provides a working memory to the DMB processor 20. In accordance with the present invention, the memory 40 includes a temporary storage 41 for temporarily storing DMB audio data associated with a music file, and a music file storage 43 for finally storing the DMB audio data upon user request. The temporary storage 41 can be a volatile memory such as a Synchronous Dynamic Random Access Memory (SDRAM) or a non-volatile memory such as a NAND memory. The music file storage 43 is a non-volatile memory.

In operation, the DMB processor 20 selects an audio channel upon user request and determines whether the audio channel is a programmed channel or a non-programmed channel, referring to already received Electronic Program Guide (EPG) data. The programmed channel is defined as a channel that delivers a program host's comments and music alternately, and the non-programmed channel is defined as a channel that broadcasts an unspecified number of music files. After transmission of a music file, the non-programmed channel transmits an Event Information present/following table (EIT p/f table) and then broadcasts the next music file. The EIT p/f table is a type of EPG data and contains information about following music files. In general, the EIT p/f file provides information about the two following music files to be sent after transmission of the EIT p/f table. Music file information indicates the title and artist of a music file.

In the case of a non-programmed channel, the DMB processor 20 stores in real time a DMB audio signal corresponding to a music file received through the DMB receiver 30 in the temporary storage 41 and outputs it through the audio processor 70. The DMB receiver 30 then monitors reception of a recording request from the user until before receiving the next EIT p/f table. Upon receipt of a recording request from the user, the DMB audio data stored in the temporary storage 41 is finally moved into the music file storage 43 and the temporary storage 41 is made empty. In the absence of the recording request until before reception of the next EIT p/f table, the DMB audio data is deleted from the temporary storage 41.

When receiving the next EIT p/f table, the DMB processor 20 starts to store in real time DMB audio data following the next EIT p/f table in the temporary storage 41.

That is, the DMB processor 20 temporarily stores the DMB audio data of a received music file. Upon receipt of a recording request from the user during receiving the DMB audio data, the DMB processor 20 finally stores the DMB audio data after complete reception of the DMB audio data. The reception start and end of the DMB audio data are defined by the time points when EIT p/f tables are received because an EIT p/f table follows one music file and another music file follows the EIT p/f table in the DMB system. Thus, the time when an EIT p/f table preceding the DMB audio data is received is the reception start of the DMB audio data, and the time when the next EIT p/f table is received is the reception end of the DMB audio data. Accordingly, only if the recording request is issued between the reception time of the EIT p/f table and the reception time of the next EIT p/f table, it is valid.

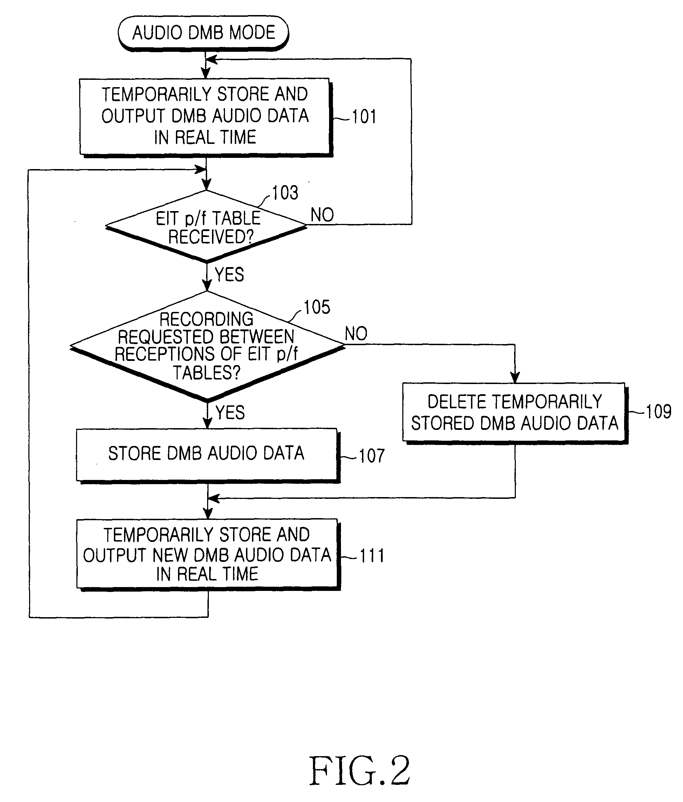

The above operation of the DMB processor 20 is described with reference to the flowchart of FIG. 2, which illustrates an operation of the DMB terminal according to the present invention.

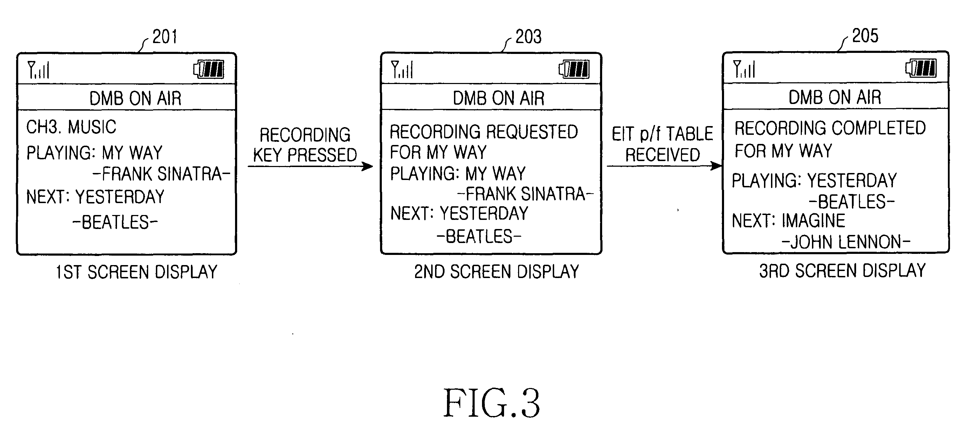

Referring to FIG. 2, in a DMB reception mode, the DMB processor 20 temporarily stores the DMB audio data of an on-going music file in real time and outputs it in step 101. At the same time, the screen of the DMB terminal displays messages as shown in a first screen display 201 of FIG. 3. The first screen display 201 displays the current broadcasting channel, the title and singer of the current song, and the title and singer of the next song. In this case, the DMB audio data of an on-going music file entitled "My Way" is being temporarily recorded and stored.

Referring to FIG. 2 again, the DMB processor 20 determines whether an EIT p/f table has been received in step 103. Upon receipt of the EIT p/f table, the DMB processor 20 proceeds to step 105 and otherwise, it returns to step 101. In step 105, the DMB processor 20 determines whether the user has requested recording of the DMB audio data during the time period between the reception of the previous EIT p/f table and the reception of the current EIT p/f table. If the user has, the DMB processor 20 goes to step 107 and if not, the DMB processor 20 proceeds to step 109. For example, upon request for a recording, the DMB processor 20 displays a message indicating the recording request and temporarily stores the recording request event. Upon receipt of the EIT p/f table, the DMB processor 20 checks the presence or absence of the temporarily stored recording request event. The DMB processor 20 finally stores the temporarily stored DMB audio data in step 107 and proceeds to step 111.

Referring to FIG. 3, upon input of a Record key during receiving the DMB audio data of a music file, the DMB processor 20 displays information about the current and next music files and a message indicating that recording has been requested as illustrated in a second screen display 203. Upon receipt of an EIT p/f table at a later time, the DMB processor 20 finally stores the temporarily stored DMB audio data and displays a message indicating successful recording of the DMB audio data as illustrated in a third screen display 205. As the DMB processor 20 receives the DMB audio data of a new music file, it starts to temporarily store the DMB audio data at the time when the EIT p/f table is received. At the same time, the DMB processor 20 displays information about the current music file and information about the next music file set in the EIT p/f table.

Referring to FIG. 2 again, the DMB processor 20 deletes the temporarily stored music file in step 109. In step 111, the DMB processor 20 temporarily stores the DMB audio data of an on-going music file in real time, from the time when the EIT p/f table has been received, and outputs it. Then the DMB processor 20 returns to step 103.

As described above, the present invention advantageously enables accurate and convenient recording of an entire music file since the DMB audio data of the music file is temporarily stored in real time and, upon user request for the recording of the music file at any time during receiving the music file, the entire temporarily stored DMB audio data is finally stored.

While the invention has been shown and described with reference to a certain preferred embodiment thereof, it will be understood by those skilled in the art that various changes in form and details may be made therein without departing from the scope of the invention as defined by the appended claims.

## Claims

1. A method of storing digital multimedia broadcasting audio data in a digital multimedia broadcasting terminal, comprising the steps of:
outputting digital multimedia broadcasting audio data of a currently received music file in real time in a digital multimedia broadcasting reception mode, while temporarily storing the digital multimedia broadcasting audio data; and
finally storing the digital multimedia broadcasting audio data, upon receipt of a recording request from a user during temporarily storing the digital multimedia broadcasting audio data.

2. The method of claim 1, further comprising the step of deleting the temporarily stored digital multimedia broadcasting audio data in the absence of the recording request from the user during temporarily storing the digital multimedia broadcasting audio data.

3. The method of claim 1, wherein the step of finally storing the digital multimedia broadcasting audio data comprises the steps of:
completing the temporary storing of the digital multimedia broadcasting audio data, upon receipt of an event information present/following table ; and
finally storing the digital multimedia broadcasting audio data upon receipt of the recording request from the user before receiving the event information present/following table.

4. The method of claim 3, further comprising the step of outputting digital multimedia broadcasting audio data of a new music file received after the event information present/following table in real time, while temporarily storing the digital multimedia broadcasting audio data.

5. The method of claim 3, wherein the temporary storing step comprises the step of starting to temporarily store the digital multimedia broadcasting audio data when an event information present/following table is received before the digital multimedia broadcasting audio data, and ending the temporary storing of the digital multimedia broadcasting audio data when the next event information present/following table is received after the digital multimedia broadcasting audio data.

6. An apparatus for storing digital multimedia broadcasting audio data in a digital multimedia broadcasting terminal, comprising:
a digital multimedia broadcasting receiver for receiving digital multimedia broadcasting data;
a memory for storing the digital multimedia broadcasting data; and
a digital multimedia broadcasting processor for outputting digital multimedia broadcasting audio data of a currently received music file in real time in a digital multimedia broadcasting reception mode, while temporarily storing the digital multimedia broadcasting audio data, and finally storing the digital multimedia broadcasting audio data, upon receipt of a recording request from a user during temporarily storing the digital multimedia broadcasting audio data.

7. The apparatus of claim 6, wherein the digital multimedia broadcasting processor deletes the temporarily stored digital multimedia broadcasting audio data in the absence of the recording request from the user during temporarily storing the digital multimedia broadcasting audio data.

8. The apparatus of claim 6, wherein the digital multimedia broadcasting processor completes the temporary storing of the digital multimedia broadcasting audio data, upon receipt of an event information present/following table, and finally stores the digital multimedia broadcasting audio data upon receipt of the recording request from the user before receiving the event information present/following table.

9. The apparatus of claim 8, wherein the digital multimedia broadcasting processor outputs digital multimedia broadcasting audio data of a new music file received after the event information present/following table in real time, while temporarily storing the digital multimedia broadcasting audio data.

10. The apparatus of claim 8, wherein the digital multimedia broadcasting processor starts to temporarily store the digital multimedia broadcasting audio data when an event information present/following table is received before the digital multimedia broadcasting audio data, and ends the temporary storing of the digital multimedia broadcasting audio data when the next event information present/following table is received after the digital multimedia broadcasting audio data.
